# EUROPEAN PATENT SPECIFICATION

(11) **EP 3 230 716 B1**
(45) Date of publication and mention of the grant of the patent: **06.04.2022**
(21) Application number: 15867075.2
(22) Date of filing: 10.12.2015
(51) Int. Cl.: G01N 21/64, G01N 15/14

(54) **SELF-TRIGGERED FLOW CYTOMETER**
SELBSTAUSGELÖSTES DURCHFLUSSZYTOMETER
CYTOMÈTRE EN FLUX À DÉCLENCHEMENT AUTOMATIQUE

(30) Priority: 10.12.2014 US 201462089864 P
(43) Date of publication of application: 18.10.2017
(73) Proprietor: Cytek Biosciences Inc., Fremont, CA 94538 (US)
(72) Inventor: JIANG, Wenbin, Danville, CA 94506 (US)
(74) Representative: Howe, Steven
(86) International application number: PCT/US2015/064989
(87) International publication number: WO 2016/094654

(56) References cited:
- DE-A1-102009 015 341
- US-A1- 2003 141 906
- US-A1- 2005 275 839
- US-A1- 2005 275 839
- US-A1- 2009 122 311
- US-A1- 2010 014 068
- US-A1- 2010 155 572
- US-A1- 2012 078 531
- US-A1- 2013 286 191
- US-A1- 2014 147 860

## Description

### FIELD OF INVENTION

The present invention generally relates to cytometers; and more particularly, flow-cytometers and methods of making, design, use, and integrating, these cytometers into systems.

### BACKGROUND

Generally, flow-cytometry is a method for counting, examining, sorting, measurement of and characterization of various aspects of microscopic particles, bio-particles, bio-cells, and their derivatives to determine their physical and/or chemical characteristic via an optical and/or electronic detection apparatus. The early development of a flow-cytometric system was based on impedance and was developed by Wallace H. Coulter in 1953. Over the years, several developments where made by Mack Fulwyler, Wolfgang Gohde, and others that increased the system's useful acceptability into the marketplace. In today's conventional flow-cytometry, the flow-cytometry is generally based on the use of light in the visible spectrum.

Typicality, a flow-cytometer is an analytical instrument that emits a certain frequency or frequencies of light that are directed toward a sample or samples. The light emitted from the light source excites the sample to emit a certain frequency or frequencies of light from the surface of the sample and in some cases from inside the sample. The frequencies of light that are emitted from the surface of the sample and in some cases emitted from the interior of the sample are collected and analyzed.

However, certain problems such as non-integration of certain parts into unitary whole or unitary design has made the adoption of conventional flow-cytometric machines slow to come into the marketplace. Also, because of this poor design, conventional flow-cytometers are not capable of accurately counting and characterizing cells, bio-cells cells, and/or biologic materials, thereby limiting the use and potential usefulness of conventional flow-cytometric instruments. Moreover, this poor design causes other problems such as manufacturing, reliability, and the like degrades the usefulness of conventional flow-cytometers in the marketplace. Further, the poor design of conventional flow-cytometers limits the manufacturing capability and cost parameters which drives up costs. Thus, limiting the manufacturing capability and making conventional flow-cytometers more expensive.

It can be readily seen that conventional flow-cytometers have several problems and disadvantages. Despite many potential advantages of flow- cytometry, market acceptance is limited, especially in portable and non-portable applications. Further, since some of the applications of flow-cytometry are high volume applications, these problems and disadvantages do not allow conventional flow-cytometric technology to be used so as to drive the cost of flow-cytometry lower and to be more useful in high volume applications. Therefore, a low cost flow-cytometric system or instrument capable of high volume manufacturability and better efficiency would be highly desirable.

US 2005/275839 discloses a cytometer with a trigger based on the scattering signal.

US 2014/147860 discloses a cytometer showing examples using luminescence as a measurement trigger and detector arrays.

US 2009/122311 is a flow cytometer with fluorescence triggered detector array not showing any integration of signals.

### SUMMARY OF THE INVENTION

The present invetion is defined in independent claim 1. Variations are defined in the dependent claims.

### BRIEF DESCRIPTION OF THE DRAWING

Representative elements, operational features, applications and/or advantages of the present invention reside *inter alia* in the details of construction and operation as more fully hereafter depicted, described and claimed - reference being made to the accompanying drawings forming a part hereof, wherein like numerals refer to like parts throughout.

Other elements, operational features, applications and/or advantages will become apparent to skilled artisans in light of certain exemplary embodiments recited in the Detailed Description, wherein:
FIG. 1 is a schematic illustration of a conventional simplified flow-cytometer showing an excitation light source, a flow path, a plurality of multiple photo-detectors, multiple filters, multiple gates, and a digital signal processor, and a triggering device;
FIG. 2 is a simplified schematic illustration of an embodiment of a flow-cytometer illustrating the present invention and showing an excitation light source flow path, a plurality of multiple photo-detectors, a digital signal processor, and a triggering device; and
FIG. 3 is a simplified schematic illustration of another embodiment of the present invention illustrating a simplified flow-cytometer showing an excitation light source, a flow path, a plurality of multiple photo-detectors, and a digital signal processor, and a triggering device.

Those skilled in the art will appreciate that elements in the Figures are illustrated for simplicity and clarity and have not necessarily been drawn to scale. For example, the dimensions of some of the elements in the Figures may be exaggerated relative to other elements to help improve understanding of various embodiments of the present invention. Furthermore, the terms 'first', 'second', and the like herein, if any, are used *inter alia* for distinguishing between similar elements and not necessarily for describing a sequential or chronological order. Moreover, the terms front, back, top, bottom, over, under, and the like in the Description and/or in the claims, if any, are generally employed for descriptive purposes and not necessarily for comprehensively describing exclusive relative position. Skilled artisans will therefore understand that any of the preceding terms so used may be interchanged under appropriate circumstances such that various embodiments of the invention described herein, for example, are capable of operation in other orientations than those explicitly illustrated or otherwise described.

### DETAILED DESCRIPTION OF EXEMPLARY EMBODIMENTS

Before addressing details of embodiments described below, some terms are defined or clarified.

The term "filter" is intended to mean any material or device that is capable of filtering, impeding, or preventing certain frequencies of light to pass thought the filter.

The term "emission detector" is intended to any device or material that is capable of detecting and/or sensing emission from the sample material. Typically, an emission detector can sense or detect a variety of frequencies. However, it should be understood that the emission detector can sense or detect a single frequency of light or a small group of frequencies of light. Additionally, the emission detector can be made with a variety of emission detectors.

The term "sample" is intended to mean any material or materials, any biologic or non-biologic material that is capable of emitting light or being luminescent from the sample being exited from the source.

The term "bio-sample" is intended to mean any biologic material or materials, capable of emitting light or luminescing from the sample being exited from the source.

The term "bio-cell(s)" is intended to mean a fundamental biologic unit that can be alive and/or dead.

The term "cell(s)" is intended to mean a fundamental unit that can either be alive of not alive. By way of example only, but not limited to, a virus, a mycoplasmas, or the like are sometimes hard to define.

The term "luminescence spectrum" is intended to mean a spectrum of bright lines, bands, or continuous radiation characteristics of and determined by a specific emitting substances subjected to a specific kind of excitation.

The term "luminescence signal capturing" is intended to mean the capture and recording of output signals from the illumination of the bio-sample by the light source which causes the bio-sample luminance at certain frequencies that allow certain characteristics to be identified and recorded.

The term "excitation light source" is intended to mean any suitable light source that is capable of illuminating a sample and emitting luminescence.

The term "flow path" is intended to mean any suitable liquid that is capable of suspending and carrying a sample to a region wherein the sample can be illuminated by the excitation light source.

The term "digital signal processor" (DSP) (also known as a Digital signal device) is intended to mean a specialized microprocessor (or a SIP block), with its architecture optimized for the operational needs of digital signal processing. Typically, the goal of DSPs is usually to measure, filter and/or compress continuous real-world analog signals.

As used herein, the terms "comprises", "comprising", or any variation thereof, are intended to reference a non-exclusive inclusion, such that a process, method, article, composition or apparatus that comprises a list of elements does not include only those elements recited, but may also include other elements not expressly listed or inherent to such process, method, article, composition or apparatus. Other combinations and/or modifications of the above-described structures, arrangements, applications, proportions, elements, materials or components used in the practice of the present invention, in addition to those not specifically recited, may be varied or otherwise particularly adapted by those skilled in the art to specific environments, manufacturing specifications, design parameters or other operating requirements without departing from the general principles of the same.

Further, unless expressly stated to the contrary, "or" refers to an inclusive or and not to an exclusive or. For example, a condition A or B is satisfied by any one of the following: A is true (or present) and B is false (or not present), A is false (or not present and B is true (or present, and both A and B are true (or present). Also, use of the "a" or "an" are employed to describe elements and components of the invention. This is done merely for convenience and to give a general sense of the invention. This description should be read to include one or at least one and the singular also includes the plural unless it is obvious tat it is meant otherwise.

Unless otherwise defined, all technical and scientific terms used herein have the same meaning as commonly understood by one of ordinary skill in the art to which this invention belongs. Although methods and materials similar or equivalent to those described herein can be used in the practice or testing of the present invention, suitable methods and materials are described below. In addition, the materials, methods, and examples are illustrative only and not intended to be limiting.

To the extent not described herein, many details regarding specific materials, processing acts, and circuits are conventional and may be found in textbooks and other sources within the fuel cell and chemical arts.

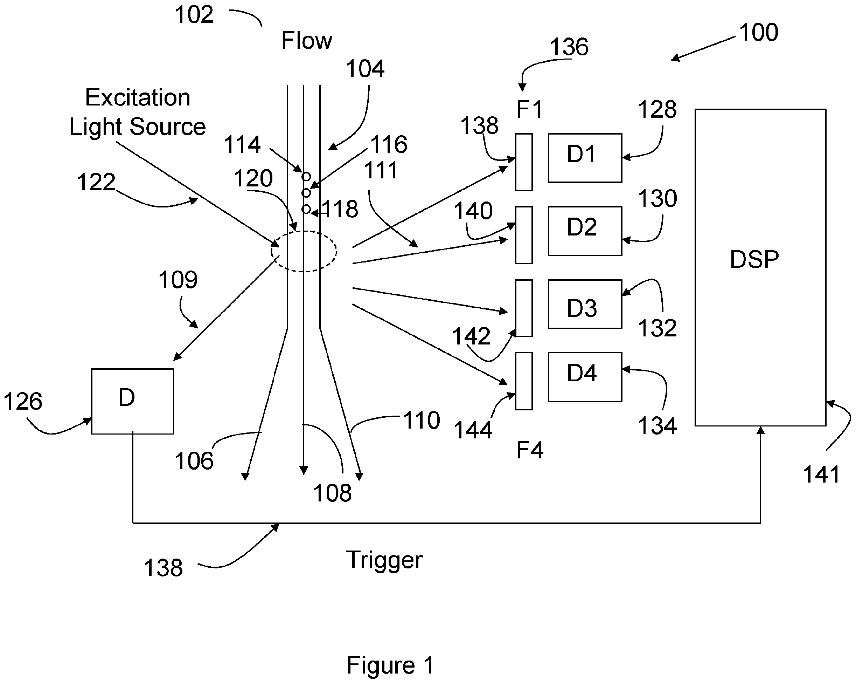

Referring now to FIG 1, FIG. 1 is conventional flow-cytometer 100 incorporating an optical spectrum analyzer to analyze bio molecules that are excited to luminescence, indicted by arrows 109 and 111. Such luminescence's can be generated either by auto-luminescent from the cell itself or from a color label tag, or marker, attached to the bio cell or cells. Information about the bio cell or cells can be obtained though the analysis of spectrum, which includes its wavelength distribution and intensity different spectrum distribution indicate the presence of different bio-cells and/or markers on the bio-cell(s). Additionally, its corresponding intensity indicates the concentration of such distinct bio cells or distinct marker on the bio-cell(s).

Typical bio-samples 114 may include varieties of bio-cell molecules, each corresponding to a unique spectral distribution through either auto-luminescence generation or a labeled color tag. Conventional flow-cytometer 100 incorporates multiple photo-detectors 128, 130, 132, 134, and 126, such as photomultiplier tubes (PMTs), with filters 138, 140, 142, and 144 which can be customized to receive the correspondent luminescence spectrum 109 and a plurality of spectrum 111 and their intensity and reject the rest, as shown in Figure 1. One photo-detector such as photo-detector 132 thus corresponds to one type of bio-cell molecule or marker on the bio-cell. Conventional flow-cytometer 100 includes a liquid flow path 102 containing bio-cell samples 114. Excitation light source, such as a semiconductor laser or LED, is used to excite bio samples 114 in region 120 on flow path 102. The bio-cells at region 120 emit luminescence 111, which is collected by multiple photo-detectors 131-134 and 126 with photo-detectors 128, 130, 132, and 134 having correspondent filters 138, 140, 142, and 144 to allow only interested luminescence spectral contents to be detected by any individual photodetector within 128, 130, 132, and 134. The output analog signals of the photo-detector 128, 130, 132, and 134 are digitized by the digital signal processing (DSP) 141 circuitry, which includes multiple A/D converters. Scattering light 109 from the bio-sample region 120 is captured by a photo-detector 126, which generates triggering signal 143 to trigger DSP 141 to synchronize the luminescence signal capturing. This also allows counting of the bio cells or markers on the bio cells in addition to recording their emitted luminescence under light excitation. Additionally, crosstalk between different markers is compensated by complicated calibration procedures.

Different bio-cell molecules emit different characteristic luminescence due to its own unique auto-luminescence or the attached color labels. The luminescence spectrums may overlap with each other if they are too close to each other in wavelengths. This crosstalk limits the detection sensitivity and the simultaneous detection of multiple types of bio cells or markers on the bio cells.

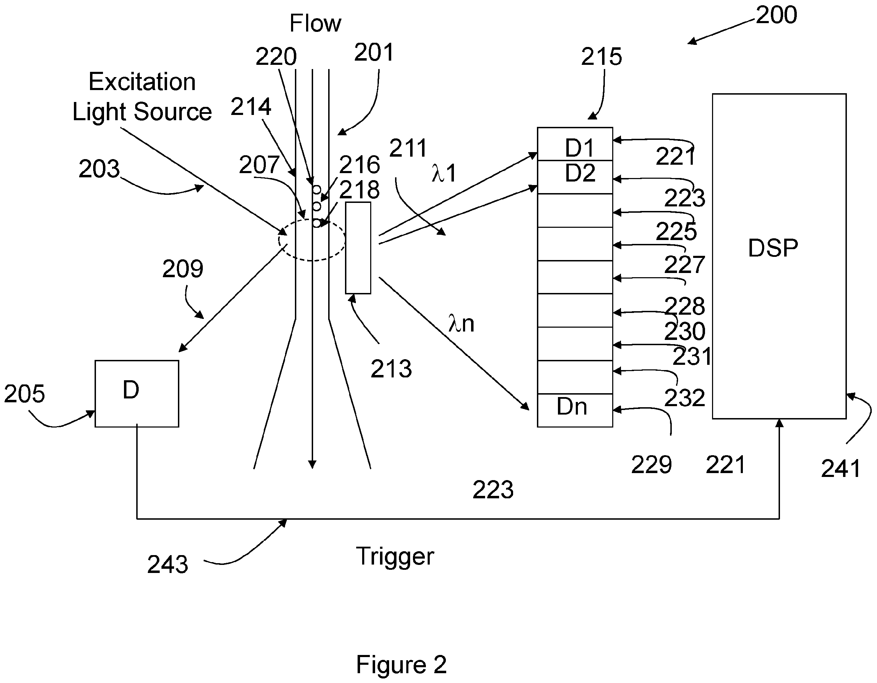

Referring now to FIG. 2, FIG. 2 is a simplified schematic illustration of a flow-cytometer 200 that has been simplified so as to better illustrate the present invention. FIG. 2 shows an excitation light source 203, a flow path 201, a plurality photo-detectors 215, with individual photo-detectors 205, 221, 223, 225, 227, 228, 230, 231.232 and 229 individually identified, a digital signal processor 241, and a triggering device 243. Further, as shown in FIG. 2, flow-cytometer 200 includes a liquid flow path 201 having a plurality of bio-samples 214, illustrated by individual bio-samples 216, 218, and 220. The plurality of bio-samples 214 are typically suspended in any suitable liquid, suspension, or liquid medium capable of carrying the plurality of bio-samples 214 to region 207.

Generally, any suitable liquid suspension or liquid medium can be used such as, but not limited to, saline, five percent dextrose, buffering solution, or the like. As illustrated in FIG. 2, flow path 201 is indicated by a plurality of flow lines.

As shown in FIG, 2, excitation light source 203 is used to illuminate region 207 wherein individual bio samples 214 are illuminated as the bio-samples pass though region 207. Excitation light source 203 can be made of any suitable device such as, a light emitting diode, light emitting photo-diode, a laser, a semiconductor laser, or the like. Moreover, excitation light source 203 can be configured to produce any suitable wavelength or wavelengths of light that is desired. By way of example, after the plurality of bio-samples 214 are illumined by excitation light source 203, the plurality of bio-samples luminescence (emit light at a different wavelength, generally a lower wavelength).

Typically, the emitted light from the luminescence of the bio-sample is collected by any suitable photo-detector or group of photo-detectors. As shown in FIG. 2, individual photo-detectors 205, 221, 223, 225, 227, 228, 229, 230. 231 and 232 are configured so as to capture light as a plurality of photo-detectors 215 depending upon the specific application and/or need.

Any suitable photo-detector can be used such as, but not limited to, a semiconductor photo-detectors, Active-pixel sensors (APSs), Charged-coupled devices (CCD), or the like.

As shown in FIG. 2 an array of photo-detectors 215 can be used to record full bio-molecule spectrum 211 dispersed spatially by a dispersive element 213, such as a grating or a prism, as shown in Figure 2. Luminescence spectrum of a color label or auto luminescence typically follows its own characteristic profile that can be pre-calibrated. When a bio-sample including multiple types of bio-cells is excited at region 207 by excitation light source 203, the characteristic luminescence profiles will overlap, and the plurality of photo-detectors or photo-detector array 215 will record the combined luminescence spectrums 211 through the individual photo-detectors 221, 223, 225, 227, 228, 230, 231, 232 and 229. Additionally, it should be understood that any suitable sized array could be used depending upon the specific application. Each photodetector component receives a particular spectrum content of the spectrum distribution. As the characteristic luminescence spectrum of any particular color label and auto-luminescence has already been pre-calibrated, the distribution intensity for each bio cell can be de-convoluted from the combined spectrums through digital data processing after the received analog signals are converted into digital data by the DSP 241. This will allow the use of more color labels closely spaced between each other in peak wavelength, thus increasing the types of bio-cells to be detected simultaneously without sacrificing the detection sensitivity. In this detection method, conventional hardware filters are not needed as the full spectrum intensity will be extrapolated and thus, a software filter can be implemented in data processing to obtain any data equivalent to that from a hardware filter in a conventional flow-cytometer. Software implementation is flexible and can be automated, thus simplifying the overall system and reducing both the manufacturing and the service cost.

In the array detection scheme, the data converted by DSP 241 is synchronized by the conventional way, i.e. by scattered excitation light or luminescence 209, which is received by a separate photo-detector 205 to generate trigger signal 243. Bio samples 214 are usually complicated and include varieties of bio cells and particles, which will all scatter light. Some of those events are of interest and others are not. When using scattered light as a trigger for the array signal capture synchronization, all of those events are counted which increases the data storage space size and slows down the data analysis. When two events of interest are spaced too close in time during the analysis, those events will be discarded because the system cannot distinguish them as two separate valid events. Alternatively, luminescence signal from a separated photodetector has been used as the trigger, and only events of interest are captured, thus improving the data analysis throughput. However, there are two deficiencies in this approach:
a When two events of interest are spaced too close to each other in timing, the system will miss one valid event.
b Extra photo detector for luminescence detection increases the system manufacturing cost.

It is the purpose of this invention to correct the deficiencies of existing flow cytometer by using received florescence light from the array photodetector to trigger the data capture and analysis. This self-triggering is possible because array photo-detector is designed to receive full luminescence signals without any optical filtering. When a valid bio cell or particle is excited by a light source, it will emit auto luminescence as the background in addition to the luminescence from the attached color label. Conventional flow cytometer removes certain unwanted luminescence using an optical filter, and thus, making self-triggering not practical. With the array photo-detector that captures complete optical spectrums, self-triggering becomes feasible.

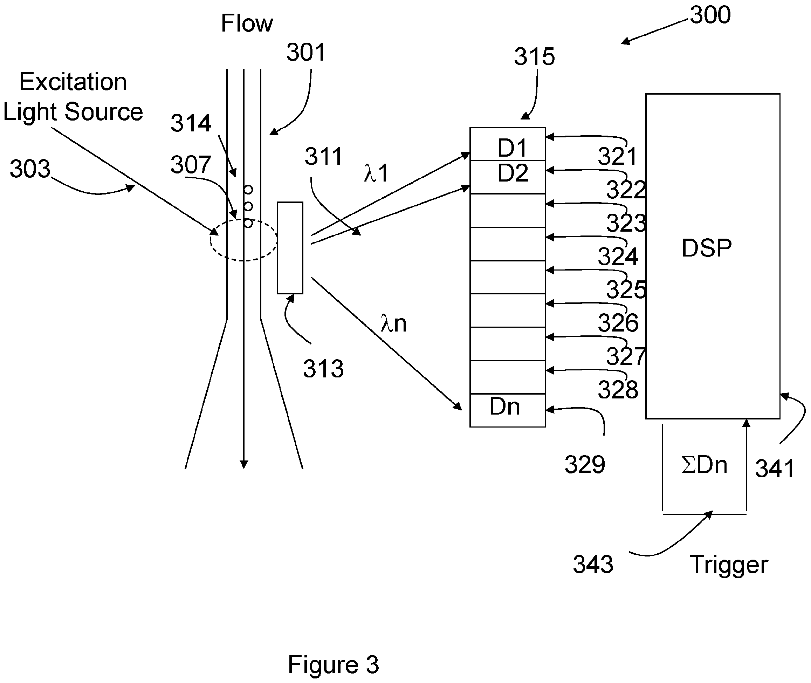

Referring now to FIG. 3, FIG 3 shows a simplified schematic illustration of another embodiment of the present invention illustrating a simplified flow-cytometer 300 showing an excitation light source 303, a flow path 301, a plurality of multiple photo-detectors 315, and a digital signal processor 341, and a triggering device 343.

As shown in Figure 3, flow-cytometer 300 shows an excitation light source 303 that excites bio-samples 314 in region 307 in the flow path 301, which emit luminescence. A dispersive element 313, such as grating or prism, spreads the luminescence spectrum 311 onto array photo-detector 315 with array components 321, 322, 323, 324, 325, 326, 327, 328, and 329. The array photo-detector 315 can be made of avalanche photodiode (APD) or the normal PMT. An add-logic in DSP 341 after the array photo-detector integrates all signals received from the array elements, and the output signal ΣDn is used as trigger 343 to synchronize the data capturing by DSP341. This output ΣDn from the add-logic should be in sync with the excited laser source whenever it encounters a bio cell of interest or marker on the bio cells in the flow path as the interested bio cell will emit either auto-luminescence or luminescence from the attached color label, thus enabling the cell counting of the events of interest while recording the associated luminescence spectrum for either in-situ or after-test data processing. More sophisticated triggering can be adopted through logic-add of signals from selected array receiver components, thus allowing to target selected cells for analysis, improving system efficiency and reduce detection error when analyzing such cells. For example, if only certain bio cells are of interest during analysis and the color labels for these cells are known, only signals from the correspondent photo receiver array components will be logic added as signal trigger during the operation.

We have thus provided a simple and effective low cost self-triggered flow cytometer to capture complete spectrum information and improve the throughput of cell counting while also allowing the operation in presence of large unwanted molecules without bio-sample washing and lysing, thus simplifying the sample preparation process

## Claims

1. A self-triggered flow-cytometer comprising:
a liquid flow path for carrying a bio-sample to a region of the liquid flow path
an excitation light source arranged to illuminate the region of the flow path, wherein the illumination of the bio sample in the region of the flow path causes the bio-sample to luminesce;
a spectrum dispersive element arranged to disperse at least a portion of the luminescence from the bio-sample;
a photo detection device having an array of photodetectors arranged to receive the luminescence dispersed by the spectrum dispersive element such that each photodetector receives a particular spectrum content of the dispersed luminescence, and arranged to generate an analog signal;
a digital signal processor, the digital signal processor including an analog to digital converter for converting the analog signals from the array of photodetectors to digital signals, including a storage space having a digital storage space input and a digital storage space output, additionally including an analysis space,
wherein the digital signal processor is configured to use the signals received from the array of photodetectors to cause the digital signal processor to store and analyse data from the photo detection device;
the flow cytometer is charaterised in that the digital signal processor includes an add-logic that logically adds signals received from the array of photodetectors and uses the logically added signals as a trigger to cause the digital signal processor to store and analyse data from the photo detection device.

2. The self-triggered flow-cytometer as claimed in claim 1 wherein the excitation light source is a laser diode.

3. The self-triggered flow-cytometer as claimed in claim 1 wherein each photodetector of the photo-detection device is an avalanche photo diode array (APD).

4. The self-triggered flow-cytometer as claimed in claim 1 wherein the luminescence emitted by the bio sample is auto-luminescence.

5. The self-triggered flow-cytometer as claimed in claim 1 wherein the luminescence emitted by the bio-sample is luminescence from marker on the bio-cell.

6. The self-triggered flow-cytometer as claimed in claim 1 wherein the spectrum dispersive element is a grating.

7. The self-triggered flow-cytometer as claimed in claim 1 wherein the spectrum dispersive element is a prism.

## Patentansprüche

1. Selbstausgelöstes Durchflusszytometer, aufweisend:
einen Flüssigkeitsströmungsweg zum Transportieren einer biologischen Probe zu einer Region des Flüssigkeitsströmungswegs;
eine Anregungslichtquelle, die zum Beleuchten der Region des Durchflusswegs angeordnet ist, wobei die Beleuchtung der biologischen Probe in der Region des Durchflusswegs die biologische Probe zum Lumineszieren veranlasst;
ein spektral dispersives Element, das für die Dispersion wenigstens eines Teils der Lumineszenz von der biologischen Probe angeordnet ist;
eine Lichtdetektionsvorrichtung mit einem Lichtdetektorarray, die zum Empfangen der durch das spektral dispersive Element dispergierten Lumineszenz angeordnet ist, so dass jeder Lichtdetektor einen besonderen spektralen Inhalt der dispergierten Lumineszenz empfängt, und zum Erzeugen eines analogen Signals angeordnet ist;
einen Digitalsignalprozessor mit einem Analog-DigitalUmsetzer zum Umsetzen der analogen Signale aus dem Lichtdetektorarray in digitale Signale, mit einem Speicherraum, der einen Digitalspeicherraumeingang und einen Digitalspeicherraumausgang aufweist, außerdem mit einem Analyseraum,
wobei der digitale Signalprozessor zur Verwendung der aus dem Lichtdetektorarray empfangenen Signale zum Veranlassen des digitalen Signalprozessors zum Speichern und Analysieren von Daten aus der Lichtdetektionsvorrichtung konfiguriert ist;
wobei das Durchflusszytometer **dadurch gekennzeichnet ist, dass** der digitale Signalprozessor eine Addier-Logik beinhaltet, die aus dem Lichtdetektorarray empfangene Signale logisch addiert und die logisch addierten Signale als einen Auslöser verwendet, um den digitalen Signalprozessor zum Speichern und Analysieren von Daten aus der Lichtdetektionsvorrichtung zu veranlassen.

2. Selbstausgelöstes Durchflusszytometer nach Anspruch 1, wobei die Anregungslichtquelle eine Laserdiode ist.

3. Selbstausgelöstes Durchflusszytometer nach Anspruch 1, wobei jeder Lichtdetektor der Lichtdetektionsvorrichtung ein Lawinenphotodiodenarray (Avalanche Photo Diode Array, APD) ist.

4. Selbstausgelöstes Durchflusszytometer nach Anspruch 1, wobei die von der biologischen Probe emittierte Lumineszenz Autolumineszenz ist.

5. Selbstausgelöstes Durchflusszytometer nach Anspruch 1, wobei die von der biologischen Probe emittierte Lumineszenz Lumineszenz von Marker an der biologischen Zelle ist.

6. Selbstausgelöstes Durchflusszytometer nach Anspruch 1, wobei das spektral dispersive Element ein Gitter ist.

7. Selbstausgelöstes Durchflusszytometer nach Anspruch 1, wobei das spektral dispersive Element ein Prisma ist.

## Revendications

1. Cytomètre de flux à déclenchement automatique comprenant :
un chemin d'écoulement de liquide pour transporter un échantillon biologique à une région du chemin d'écoulement de liquide
une source de lumière d'excitation arrangée pour éclairer la région du chemin d'écoulement, dans lequel l'éclairage de l'échantillon biologique dans la région du chemin d'écoulement fait que l'échantillon biologique devienne luminescent ;
un élément dispersif de spectre arrangé pour disperser au moins une partie de la luminescence de l'échantillon biologique ;
un dispositif de photodétection ayant une rangée de photodétecteurs arrangés pour recevoir la luminescence dispersée par l'élément dispersif de spectre de telle sorte que chaque photodétecteur reçoit un contenu particulier du spectre de la luminescence dispersée, et arrangés pour générer un signal analogique ;
un processeur de signaux numériques, le processeur de signaux numériques comprenant un convertisseur analogique-numérique pour convertir les signaux analogiques de la rangée de photodétecteurs en des signaux numériques, comprenant un espace de stockage ayant une entrée d'espace de stockage numérique et une sortie d'espace de stockage numérique, comprenant en plus un espace d'analyse,
dans lequel le processeur de signaux numériques est configuré pour utiliser les signaux reçus de la rangée de photodétecteurs pour faire que le processeur de signaux numériques stocke et analyse des données du dispositif de photodétection ;
le cytomètre de flux est **caractérisé en ce que** le processeur de signaux numériques comprend une logique additive qui ajoute logiquement des signaux reçus de la rangée de photodétecteurs et utilise les signaux ajoutés logiquement comme un élément de déclenchement pour faire que le processeur de signaux numériques stocke et analyse des données du dispositif de photodétection.

2. Cytomètre de flux à déclenchement automatique selon la revendication 1, dans lequel la source de lumière d'excitation est une diode laser.

3. Cytomètre de flux à déclenchement automatique selon la revendication 1, dans lequel chaque photodétecteur du dispositif de photodétection est une rangée de photodiodes à avalanche (ADP).

4. Cytomètre de flux à déclenchement automatique selon la revendication 1, dans lequel la luminescence émise par l'échantillon biologique est une auto-luminescence.

5. Cytomètre de flux à déclenchement automatique selon la revendication 1, dans lequel la luminescence émise par l'échantillon biologique est une luminescence provenant d'un marqueur sur la cellule biologique.

6. Cytomètre de flux à déclenchement automatique selon la revendication 1, dans lequel l'élément dispersif de spectre est une grille.

7. Cytomètre de flux à déclenchement automatique selon la revendication 1, dans lequel l'élément dispersif de spectre est un prisme.
